# EUROPEAN PATENT SPECIFICATION

(11) **EP 4 234 497 B1**
(45) Date of publication and mention of the grant of the patent: **04.11.2026**
(21) Application number: 21881514.0
(22) Date of filing: 25.04.2021
(51) Int. Cl.: C01G 53/00, C01B 33/12, C01B 25/41, H01M 4/62, H01M 4/04, H01M 4/131, H01M 4/36, H01M 4/505, H01M 4/525, H01M 4/58

(54) **POSITIVE ELECTRODE MATERIAL, PREPARATION METHOD THEREFOR AND USE THEREOF**
POSITIVELEKTRODENMATERIAL, HERSTELLUNGSVERFAHREN DAFÜR UND VERWENDUNG DAVON
MATÉRIAU D'ÉLECTRODE POSITIVE, SON PROCÉDÉ DE PRÉPARATION ET SON UTILISATION

(30) Priority: 21.10.2020 CN 202011134254
(43) Date of publication of application: 30.08.2023
(73) Proprietor: Hengdian Group DMEGC Magnetics Co., Ltd., Jinhua, Zhejiang 322118 (CN)
(72) Inventor: ZHANG, Zhangming, Jinhua, Zhejiang 322118 (CN); LU, Hangshuo, Jinhua, Zhejiang 322118 (CN); CAO, Jiahui, Jinhua, Zhejiang 322118 (CN); ZHANG, Shenghui, Jinhua, Zhejiang 322118 (CN); CHEN, Dejun, Jinhua, Zhejiang 322118 (CN); PAN, Lingbo, Jinhua, Zhejiang 322118 (CN)
(74) Representative: HGF
(86) International application number: PCT/CN2021/089627
(87) International publication number: WO 2022/083089

(56) References cited:
- CN-A- 102 324 515
- CN-A- 102 738 458
- CN-A- 102 956 895
- CN-A- 103 000 899
- CN-A- 104 124 449
- CN-A- 108 023 087
- CN-A- 109 378 469
- CN-A- 109 659 507
- CN-A- 110 931 774
- CN-A- 112 357 977
- US-A1- 2012 171 570
- US-A1- 2012 171 570

## Description

### TECHNICAL FIELD

The present application belongs to the field of lithium-ion batteries, and relates to a positive electrode material, a preparation method therefor and use thereof.

### BACKGROUND

Lithium-ion batteries, which have high energy density, high output power, environmental friendliness, and contain no toxic substances such as lead, cadmium and mercury, have a wide application prospect in the field of electrical equipment. The lithium-ion battery positive electrode material, negative electrode material and electrolyte are the three main components of lithium-ion batteries, and their performance basically determines the performance of lithium-ion batteries. With the rapid development of the application of lithium-ion batteries, there are increasing requirements for lithium-ion batteries. At present, the common lithium-ion batteries cannot be applied at a high temperature of 80°C. It has been a hot spot in the development of lithium-ion battery technology about how to broaden the use temperature range of lithium-ion batteries.

At present, the research results show that the structure of positive electrode materials of lithium-ion batteries will be destroyed continuously during the high-temperature storage, resulting in storage failure. Meanwhile, the active surface of positive electrode materials can react with the electrolyte unfavourably, which will accelerate the damage of positive electrode materials. The residual moisture in the electrolyte will accelerate the decomposition of LiPF₆, resulting in high-temperature storage failure.

Additionally, during the high-temperature storage of lithium-ion batteries, lithium salt LiPF₆ will be decomposed continuously and produce HF and PF₅. Those two substances are unfavorable for high-temperature storage, and HF will corrode the positive electrode materials, resulting in the surface structure destruction of positive electrode materials.

CN101308925A discloses a composite coated positive electrode material for lithium-ion batteries and a preparation method therefor. The positive electrode material includes Li_{0.8-1.2}Ni_{0.7}Co_{0.2}Mn_{0.1}O₂, Li_{0.8-1.2}Ni_{0.8}Co_{0.1}Mn_{0.1}O₂ or Li_{0.8-1.2}Ni_{0.9}Co_{0.05}Mn_{0.05}O₂ as a matrix, the crystal structure is hexagonal system, and the surface of the matrix is coated with a gradient functional material layer which is 1-20% of a matrix mass ratio. The preparation method includes powder preparation, raw material mixing, sintering, surface coating, heat treatment and organic coating. The high nickel ternary material is prevented from contacting with the electrolyte, and the cycle stability of the battery is improved. However, the metal oxides used are inert materials, and their ionic conductivity is not high, which reduces the capacity and rate capability of the positive electrode materials. Moreover, their thermal conductivity is insufficient, and thus the heat generated by the electrode materials cannot be dissipated in time, the heat will be continuously accumulated, and finally the temperature rises, resulting in potential safety hazards. Moreover, the battery is difficult to store at high temperature under this condition.

CN107742711A discloses a surface coating method for a ternary positive electrode material, which reacts hydroxypropyl guanidine gum with borax to generate a gel system with three-dimensional network effect. Borax is used as a cross-linking agent, and when the boron cross-linking agent is cross-linked with guanidine gum, it firstly generates multi-stage ionization to generate borate ion B(OH)₄⁻, and then forms stable hydrogen bonds with cis-ortho position hydroxyl groups in guanidine gum molecules. A viscoelastic gel is generated through intermolecular cross-linking reaction, and then coated with boride after sintering. However, this method has disadvantages: the hydroxypropyl guanidine gum is an organic substance, which can be carbonized after the sintering at high temperature, resulting in the reduction of the positive electrode material and the destruction of the corresponding structure.

CN108199047A discloses a method for coating oxide on the surface of a lithium-ion ternary positive electrode material. Firstly, a lithium-ion ternary positive electrode material powder is dispersed in a certain amount of deionized water; after the powder is evenly dispersed, a certain amount of organic acid or salt and insoluble metal salt are added into the system to react for a certain time; then the treated ternary positive electrode material is dried, and subjected to heat treatment at a certain temperature for a period of time to obtain the oxide-coated lithium ion ternary positive electrode material. In this document, the method for wet coating sediment is adopted, and polyacrylic acid or salt and insoluble salt are adopted. This method has limitations, and the particle size of insoluble salt seriously affects the coating effect.

At present, the common lithium-ion batteries generally cannot be stored at high temperature. In the environment of more than 80°C, the batteries cannot serve basically because of the decomposition of electrolyte or the decay of positive electrode materials.

It has been an urgent technical problem to be solved about how can the lithium-ion batteries be stored at high temperature, especially at 80-85°C for more than two months.

### SUMMARY

An object of the present application is to provide a positive electrode material, a preparation method therefor and use thereof. In the present application, the positive electrode material is effectively relieved from the surface structure damage and thus improved in high-temperature storage performance by mixing the ternary positive electrode material with aluminum tripolyphosphate.

In order to achieve the object, the present application adopts the technical solutions below.

In a first aspect, the present application provides a preparation method of a positive electrode material, and the preparation method includes the following steps:
(1) mixing aluminum tripolyphosphate with a ternary positive electrode material to form a positive electrode material premix;
(2) mixing a colloidal silica sol with the positive electrode material premix in step (1) to form an positive electrode material mixture;
(3) drying the positive electrode material mixture in step (2) to obtain a positive electrode material matrix;
(4) sintering the positive electrode material matrix obtained in step (3) to obtain the positive electrode material.

For the preparation method provided by the present application, the colloidal silica sol is coated uniformly on the surface of the ternary positive electrode material, and aluminum tripolyphosphate is dispersed uniformly among the ternary positive electrode material particles as well as on the surface, which can effectively extend the storage time of the lithium-ion battery at 80-85°C to more than two months.

Optionally, in step (1), based on a total mass of aluminum tripolyphosphate and the ternary positive electrode material being 100%, the aluminum tripolyphosphate has a mass fraction of 0.1-1%, such as 0.1%, 0.2%, 0.3%, 0.4%, 0.5%, 0.6%, 0.7%, 0.8%, 0.9% or 1.0%.

In the present application, aluminum tripolyphosphate with more than 1% amount will reduce the gram capacity of the positive electrode material; aluminum tripolyphosphate with less than 0.1% amount will lead to uneven surface coating.

Optionally, the mixing in step (1) is carried out in a manner of dry mixing.

Optionally, the dry mixing is ball-milling dry mixing.

Optionally, the ball-milling dry mixing has a ball-to-material ratio of 1.5:1-2:1, such as 1.5:1, 1.6:1, 1.7:1, 1.8:1, 1.9:1, 2.0:1 or 2.1:1.

Optionally, the ball-milling dry mixing has large balls of 4 mm and small balls of 2 mm.

Optionally, the ball-milling dry mixing has a mixing time of 5-25 min, such as 5 min, 6 min, 7 min, 8 min, 9 min, 10 min, 11 min, 12 min, 13 min, 14 min, 15 min, 16 min, 17 min, 18 min, 19 min, 20 min, 2 Imin, 22 min, 23 min, 24 min or 25 min.

In the present application, the ball-milling mixing can uniformly mix the ternary positive electrode material with aluminum tripolyphosphate, and the agglomerated particles of nanoscale aluminum tripolyphosphate can be dispersed under the shear force of ball milling and fully mixed with the positive electrode material.

Optionally, a preparation method of the colloidal silica sol in step (2) includes:
dissolving a sodium silicate aqueous solution , and adding acid and/or CO₂ to form the colloidal silica sol.

Optionally, the acid and/or CO₂ added has a molar ratio of more than 1.

Optionally, the sodium silicate aqueous solution has a concentration of 5-25%, such as 5%, 6%, 7%, 8%, 9%, 10%, 11%, 12%, 13%, 14%, 15%, 16%, 17%, 18%, 19%, 20%, 21%, 22%, 23%, 24% or 25%.

Optionally, the acid includes any one or a combination of at least two of hydrochloric acid, phosphoric acid or sulfuric acid.

Optionally, the colloidal silica sol has a net silicon content of 0.1-1%, such as 0.1%, 0.2%, 0.3%, 0.4%, 0.5%, 0.6%, 0.7%, 0.8%, 0.9% or 1.0%.

In the present application, the colloidal silica sol plays the role of binder to bind aluminum tripolyphosphate on the surface of the positive electrode material, in which the aluminum tripolyphosphate is also dispersed among the ternary positive electrode material.

Optionally, the colloidal silica sol is water-base silica sol Si(OH)₄.

In the present application, the water-base silica sol Si(OH)₄ can realize surface bonding effect by contact with the active oxygen on the surface of the positive electrode material, and thus effectively reduce the alkali content on the surface of the ternary positive electrode material and improve the battery performance.

Optionally, the drying in step (3) includes vacuum drying, blast drying and/or air drying, optionally vacuum drying.

Optionally, the vacuum drying has a temperature of 100-150°C, such as 100°C, 110°C, 120°C, 130°C, 140°C or 150°C.

Optionally, the vacuum drying has a vacuum degree of -0.05 Mpa to 0.1 Mpa, such as -0.05 Mpa, -0.04 Mpa, -0.03 Mpa, -0.02 Mpa, -0.01 Mpa, 0 Mpa, 0.01 Mpa, 0.02 Mpa, 0.03 Mpa, 0.04 Mpa, 0.05 Mpa, 0.06 Mpa, 0.07 Mpa, 0.08 Mpa, 0.09 Mpa or 0.1 Mpa.

Optionally, the vacuum drying has a time of 1-10 h, such as 1 h, 2 h, 3 h, 4 h, 5 h, 6 h, 7 h, 8 h, 9 h or 10 h.

In the present application, the vacuum drying is selected because it can remove water more quickly, protect the material from CO₂ and reduce the generation of lithium carbonate on the surface.

Optionally, the sintering in step (4) has a temperature of 450-650°C, such as 450°C, 460°C, 470°C, 480°C, 490°C, 500°C, 510°C, 520°C, 530°C, 540°C, 550°C, 560°C, 570°C, 580°C, 590°C, 600°C, 610°C, 620°C, 630°C, 640°C or 650°C.

Optionally, the sintering in step (4) has a time of 1-10 h, such as 1 h, 2 h, 3 h, 4 h, 5 h, 6 h, 7 h, 8 h, 9 h or 10 h.

Optionally, step (4) further includes subjecting the product obtained from the sintering to post-treatment.

In the present application, the colloidal silica sol, which is coated on the ternary positive electrode material through step (2), is finally coated on the surface of the ternary positive electrode material in the form of silica after a series of treatments such as drying and sintering.

Optionally, the post-treatment is carried out in a manner which includes any one or a combination of at least two of crushing, sieving or iron removal.

As an optional technical solution, the preparation method of a positive electrode material in the present application includes:
(1) subjecting aluminum tripolyphosphate and a ternary positive electrode material to ball-milling dry mixing at a ball-to-material ratio of 1.5:1-2:1 for 5-25 min to form a positive electrode material premix;
(2) mixing a colloidal silica sol with the positive electrode material premix in step (1) to form a positive electrode material mixture, in which a preparation method of the silica sol includes dissolving a sodium silicate aqueous solution, and adding acid or CO₂ to form the colloidal silica sol; the sodium silicate solution has a concentration of 5-25%; the acid includes any one or a combination of at least two of hydrochloric acid, phosphoric acid or sulfuric acid;
(3) subjecting the positive electrode material mixture in step (2) to vacuum drying at 100-150°C with a vacuum degree of -0.05 Mpa to 0.1 Mpa for 1-10 h to obtain a positive electrode material matrix; and
(4) sintering the positive electrode material matrix obtained in step (3) at 450-650°C for 1-10 h, and then subjecting the product to crushing, sieving or iron removal to finally obtain the positive electrode material.

In a second aspect, the present application provides a positive electrode material prepared by the preparation method of a positive electrode material according to the first aspect.

Optionally, the positive electrode material includes a ternary positive electrode material, aluminum tripolyphosphate and a binder.

In the present application, the aluminum tripolyphosphate in the positive electrode material can be hydrolyzed to generate triphosphate ions, which can effectively chelate metal ions in the ternary positive electrode material, thereby preventing the deposition of metal ions on the negative electrode, protecting the SEI film, and further reducing the high-temperature storage performance of the lithium-ion battery, especially in the environment at 80-85°C.

Optionally, the aluminum tripolyphosphate is dispersed among the ternary positive electrode material and on the surface of the ternary positive electrode material.

Optionally, the aluminum tripolyphosphate is nanoparticles.

Optionally, the aluminum tripolyphosphate has a particle size of 2-20 nm, such as 2 nm, 3 nm, 4 nm, 5 nm, 6 nm, 7 nm, 8 nm, 9 nm, 10 nm, 11 nm, 12 nm, 13 nm, 14 nm, 15 nm, 16 nm, 17 nm, 18 nm, 19 nm or 20 nm.

In the present application, the nanoscale aluminum tripolyphosphate has a large specific surface area, and thus can play the role of inorganic binder, and its cross-linking network effect facilitates the coating material covering the surface of active materials well and covering the active sites more exhaustively. However, if the particle size of aluminum tripolyphosphate is too large, the specific surface area of the coating material will be too small, which can lead to insufficient coating of the positive electrode material and uneven coating.

Optionally, the binder is a colloidal silica sol.

Optionally, a silica coating layer is obtained by drying the colloidal silica sol.

Optionally, the silica coating layer has a thickness of 1-10 nm, such as 1 nm, 2 nm, 3 nm, 4 nm, 5 nm, 6 nm, 7 nm, 8 nm, 9 nm or 10 nm.

In a third aspect, the present application also provides a lithium-ion battery, which includes the positive electrode material according to the second aspect.

Compared with the prior art, the present application has the beneficial effects below.
(1) The aluminum tripolyphosphate in the positive electrode material provided by the present application can be hydrolyzed to generate triphosphate ions, which can effectively chelate metal ions on the surface, thereby inhibiting the dissolution of metal elements, preventing the deposition of metal ions on the negative electrode, enhancing the SEI film, and further improving the high-temperature storage performance of the lithium-ion battery.
(2) The water-base silica sol Si(OH)₄ in the positive electrode material provided by the present application can bond with the active oxygen on the surface of the positive electrode material, and thus effectively reduce the alkali content on the surface of the ternary positive electrode material and improve the battery performance.
(3) The nanoscale aluminum tripolyphosphate in the present application has a large specific surface area, and can play the role of inorganic binder, and the cross-linking network effect facilitates the coating material covering the surface of active materials well and covering the active sites more exhaustively.
(4) The lithium-ion battery provided by the present application can effectively inhibit the decomposition of electrolyte and the decay of positive electrode material in the environment of 80-85°C, and can be stored for more than two months.

### BRIEF DESCRIPTION OF DRAWINGS

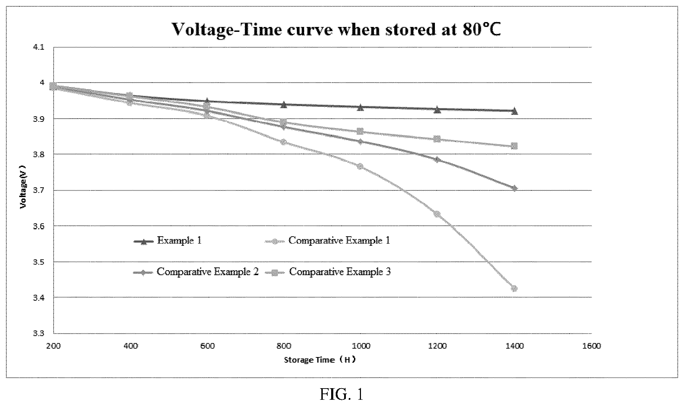

FIG. 1 is a voltage graph of lithium-ion batteries provided by Example 1 and Comparative Examples 1-3 which are stored at 80°C.

### DETAILED DESCRIPTION

The technical solutions of the present application will be further explained by the embodiments below. It should be apparent to those skilled in the art that the embodiments are only for a better understanding of the present application, and should not be regarded as a specific limitation of the present application.

### Example 1

A preparation method of a positive electrode material includes the following steps:
(1) aluminum tripolyphosphate powders with a particle size of 2 nm and a nickel-cobalt-manganese ternary positive electrode material (NCM811) were subjected to ball-milling dry mixing, in which based on a total mass of the aluminum tripolyphosphate powders and the nickel-cobalt-manganese ternary positive electrode material being 100%, the aluminum tripolyphosphate powders had a mass fraction of 0.1%, the ball-milling dry mixing had a ball-to-material ratio of 1.5:1, the ball milling had large balls of 4 mm and small balls of 2 mm, and a ball-milling time was 5 min, and a positive electrode material premix was formed for later use;
(2) a colloidal silica sol was firstly prepared by dissolving a 5% sodium silicate aqueous solution and adding excessive CO₂, thus the colloidal silica sol with a net silicon content of 0.1% was prepared, and the colloidal silica sol was mixed with the positive electrode material in step (1) to form a positive electrode material mixture;
(3) the positive electrode material mixture in step (2) was subjected to vacuum drying at 150°C with a drying vacuum degree adjusted to -0.05 Mpa for 1 h to obtain a positive electrode material matrix; and
(4) the positive electrode material matrix obtained in step (3) was sintered at 650°C for 1 h, and then subjected to crushing, sieving and iron removal to finally obtain the positive electrode material.

The positive electrode material prepared in this example includes the ternary positive electrode material, aluminum tripolyphosphate and a silica coating layer. The aluminum tripolyphosphate is dispersed among the ternary positive electrode material, on the surface of the ternary positive electrode material, and inside the ternary positive electrode material; the silica coating layer is coated on the surface of the ternary positive electrode material. For the positive electrode material, aluminum tripolyphosphate has a mass percentage of 0.1%, and the silica coating layer has a thickness of 10 nm.

The positive electrode material obtained in this example, conductive agent SP and 5130 PVDF binder were prepared into a slurry according to a ratio of 96.9%:2%:1.1%, the slurry was prepared into an electrode sheet, and a 18650 lithium-ion battery was assembled, charged to 4.1 V, stored in a high-temperature box at 80°C for 1500 hours, and tested for the voltage condition every 200 hours.

### Example 2

A preparation method of a positive electrode material includes the following steps:
(1) aluminum tripolyphosphate powders with a particle size of 20 nm and a nickel-cobalt-manganese ternary positive electrode material (NCM811) were subjected to a mixing reaction, in which based on a total mass of the aluminum tripolyphosphate powders and the nickel-cobalt-manganese ternary positive electrode material being 100%, the aluminum tripolyphosphate powders had a mass fraction of 1%, the ball-milling dry mixing had a ball-to-material ratio of 1.5:1, the ball milling had large balls of 4 mm and small balls of 2 mm, and a ball-milling time was 5 min, and a positive electrode material premix was formed for later use;
(2) a colloidal silica sol was firstly prepared by dissolving a 25% sodium silicate aqueous solution and adding excessive CO₂, thus the colloidal silica sol with a net silicon content of 1% was prepared, and the colloidal silica sol was mixed with the positive electrode material in step (1) to form a positive electrode material mixture; a drying temperature was 100°C, a drying vacuum degree was adjusted to 1 Mpa, the product was dried for 10 h, and a positive electrode material matrix was obtained;
(3) the positive electrode material mixture in step (2) was subjected to vacuum drying at 135°C with a drying vacuum degree adjusted to -0.09 Mpa for 5 h to obtain a positive electrode material matrix; and
(4) the positive electrode material matrix obtained in step (3) was sintered at 450°C for 10 h, and then subjected to crushing, sieving and iron removal to finally obtain the positive electrode material.

The positive electrode material prepared in this example includes the ternary positive electrode material, aluminum tripolyphosphate and a silica coating layer. The aluminum tripolyphosphate is dispersed among the ternary positive electrode material, on the surface of the ternary positive electrode material, and inside the ternary positive electrode material; the silica coating layer is coated on the surface of the ternary positive electrode material. For the positive electrode material, aluminum tripolyphosphate has a mass percentage of 1%, and the silica coating layer has a thickness of 1 nm.

In this example, the battery was prepared and tested in the same way as in Example 1.

### Example 3

A preparation method of a positive electrode material includes the following steps:
(1) aluminum tripolyphosphate powders with a particle size of 10 nm and a nickel-cobalt-manganese ternary positive electrode material (NCM811) were subjected to a mixing reaction, in which based on a total mass of the aluminum tripolyphosphate powders and the nickel-cobalt-manganese ternary positive electrode material being 100%, the aluminum tripolyphosphate powders had a mass fraction of 0.5%, the ball-milling dry mixing had a ball-to-material ratio of 1.5:1, the ball milling had large balls of 4 mm and small balls of 2 mm, and a ball-milling time was 5 min, and a positive electrode material premix was formed for later use;
(2) a colloidal silica sol was firstly prepared by dissolving a 10% sodium silicate aqueous solution and adding excessive hydrochloric acid, thus the colloidal silica sol with a net silicon content of 0.5% was prepared, and the colloidal silica sol was mixed with the positive electrode material premix in step (1) to form a positive electrode material mixture;
(3) the positive electrode material mixture in step (2) was subjected to vacuum drying at 135°C with a drying vacuum degree adjusted to -0.05 Mpa for 5 h to obtain a positive electrode material matrix; and
(4) the positive electrode material matrix obtained in step (3) was sintered at 550°C for 8 h, and then subjected to crushing, sieving and iron removal to finally obtain the positive electrode material.

The positive electrode material prepared in this example includes the ternary positive electrode material, aluminum tripolyphosphate and a silica coating layer. The aluminum tripolyphosphate is dispersed among the ternary positive electrode material, on the surface of the ternary positive electrode material, and inside the ternary positive electrode material; the silica coating layer is coated on the surface of the ternary positive electrode material. For the positive electrode material, aluminum tripolyphosphate has a mass percentage of 0.4%, and the silica coating layer has a thickness of 5 nm.

In this example, the battery was prepared and tested in the same way as in Example 1.

### Example 4

A preparation method of a positive electrode material includes the following steps:
(1) aluminum tripolyphosphate powders with a particle size of 2 nm and a nickel-cobalt-manganese ternary positive electrode material (NCM811) were subjected to a mixing reaction, in which based on a total mass of the aluminum tripolyphosphate powders and the nickel-cobalt-manganese ternary positive electrode material being 100%, the aluminum tripolyphosphate powders had a mass fraction of 0.1%, the ball-milling dry mixing had a ball-to-material ratio of 1.5:1, the ball milling had large balls of 4 mm and small balls of 2 mm, and a ball-milling time was 5 min, and a positive electrode material premix was formed for later use;
(2) a colloidal silica sol was firstly prepared by dissolving a 10% sodium silicate aqueous solution and adding excessive phosphoric acid, thus the colloidal silica sol with a net silicon content of 0.5% was prepared, and the colloidal silica sol was mixed with the positive electrode material premix in step (1) to form a positive electrode material mixture;
(3) the positive electrode material mixture in step (2) was subjected to vacuum drying at 135°C with a drying vacuum degree adjusted to -0.05 Mpa for 5 h to obtain a positive electrode material matrix; and
(4) the positive electrode material matrix obtained in step (3) was sintered at 550°C for 8 h, and then subjected to crushing, sieving and iron removal to finally obtain the positive electrode material.

The positive electrode material prepared in this example includes the ternary positive electrode material, aluminum tripolyphosphate and a silica coating layer. The aluminum tripolyphosphate is dispersed among the ternary positive electrode material, on the surface of the ternary positive electrode material, and inside the ternary positive electrode material; the silica coating layer is coated on the surface of the ternary positive electrode material. For the positive electrode material, aluminum tripolyphosphate has a mass percentage of 0.5%, and the silica coating layer has a thickness of 4 nm.

In this example, the battery was prepared and tested in the same way as in Example 1.

### Example 5

Compared with Example 1, this example has the same preparation steps as in Example 1 except step (1) was adjusted as follows.
(1) Aluminum tripolyphosphate powders with a particle size of 20 nm and a nickel-cobalt-manganese ternary positive electrode material (NCM811) were subjected to a mixing reaction, in which based on a total mass of the aluminum tripolyphosphate powders and the nickel-cobalt-manganese ternary positive electrode material being 100%, the aluminum tripolyphosphate powders had a mass fraction of 1%, the ball-milling dry mixing had a ball-to-material ratio of 1.5:1, the ball milling had large balls of 4 mm and small balls of 2 mm, and a ball-milling time was 25 min, and a positive electrode material premix was formed for later use.

### Example 6

Compared with Example 1, this example has the same preparation steps as in Example 1 except step (1) was adjusted as follows.
(1) Aluminum tripolyphosphate powders with a particle size of 10 nm and a nickel-cobalt-manganese ternary positive electrode material (NCM811) were subjected to a mixing reaction, in which based on a total mass of the aluminum tripolyphosphate powders and the nickel-cobalt-manganese ternary positive electrode material being 100%, the aluminum tripolyphosphate powders had a mass fraction of 0.5%, the ball-milling dry mixing had a ball-to-material ratio of 1.5:1, the ball milling had large balls of 4 mm and small balls of 2 mm, and a ball-milling time was 15 min, and a positive electrode material premix was formed for later use.

### Example 7

Compared with Example 1, this example has the same preparation steps as in Example 1 except the preparation of colloidal silica sol in step (2) was adjusted as follows.

(2) A colloidal silica sol was firstly prepared by dissolving a 25% sodium silicate aqueous solution and adding excessive CO₂, and thus the colloidal silica sol with a net silicon content of 1% was prepared.

### Example 8

Compared with Example 1, this example has the same preparation steps as in Example 1 except the preparation of colloidal silica sol in step (2) was adjusted as follows.

(2) A colloidal silica sol was firstly prepared by dissolving a 10% sodium silicate aqueous solution and adding excessive hydrochloric acid, and thus the colloidal silica sol with a net silicon content of 0.5% was prepared.

### Comparative Example 1

In this comparative example, no coating treatment was carried out on the nickel-cobalt-manganese ternary positive electrode material, specifically, no ball-milling mixing with aluminum tripolyphosphate, and no silica sol added for mixing.

### Comparative Example 2

Compared with Example 1, this comparative example has the same preparation steps as in Example 1 except step (1) was adjusted as follows.
(1) A nickel-cobalt-manganese ternary positive electrode material was subjected to ball milling, in which the ball-milling dry mixing had a ball-to-material ratio of 1.5:1, the ball milling had large balls of 4 mm and small balls of 2 mm, and a ball-milling time was 5 min, and a positive electrode material premix was formed for later use.

The positive electrode material in this comparative example includes the ternary positive electrode material and the colloidal silica sol, and the colloidal silica sol is coated on the surface of the ternary positive electrode material. Otherwise this comparative example is the same as Example 1.

### Comparative Example 3

Compared with Example 1, this comparative example has the same preparation steps as in Example 1 except step (2) was omitted.
(1) Aluminum tripolyphosphate powders with a particle size of 10 nm and a nickel-cobalt-manganese ternary positive electrode material (NCM811) were subjected to a mixing reaction, in which the ball-milling dry mixing had a ball-to-material ratio of 1.5:1, the ball milling had large balls of 4 mm and small balls of 2 mm, and a ball-milling time was 5 min, and a positive electrode material premix was formed for later use.

The positive electrode material in this comparative example includes the ternary positive electrode material and the aluminum tripolyphosphate powders mixed, but no colloidal silica sol is coated on the surface of the ternary positive electrode material. Otherwise this comparative example is the same as Example 1.

As can be seen from FIG. 1, the lithium-ion battery provided by Example 1 has obviously increased storage time at 80°C and slower decay. However, for the lithium-ion batteries in Comparative Examples 1-3 which are not coated or only coated with aluminum tripolyphosphate or silica, the storage time at 80°C is much shorter than that of the lithium-ion battery provided by Example 1.

**Table 1 shows the voltage values (V) of the batteries in different examples and comparative examples stored in a high-temperature box at 80°C every 200 hours.**

| | Examp le 1 | Examp le 2 | Examp le 3 | Examp le 4 | Examp le 5 | Examp le 6 | Examp le 7 | Examp le 8 | Compa rative Examp le 1 | Compa rative Examp le 2 | Compa rative Examp le 3 |
|---|---|---|---|---|---|---|---|---|---|---|---|
| 200 h/ Voltage (V) | 3.9907 | 3.9904 | 3.9902 | 3.9904 | 3.9904 | 3.9903 | 3.9900 | 3.9906 | 3.9852 | 3.9891 | 3.9901 |
| 400 h/ Voltage (V) | 3.9644 | 3.9636 | 3.9634 | 3.9634 | 3.9637 | 3.9633 | 3.9652 | 3.9648 | 3.9435 | 3.9525 | 3.9624 |
| 600 h/ Voltage (V) | 3.9485 | 3.9480 | 3.9469 | 3.9461 | 3.9471 | 3.9494 | 3.9464 | 3.9485 | 3.9083 | 3.9214 | 3.9324 |
| 800 h/ Voltage (V) | 3.9390 | 3.9400 | 3.9387 | 3.9388 | 3.9378 | 3.9395 | 3.9397 | 3.9364 | 3.8343 | 3.8763 | 3.8895 |
| 1000 h/ Voltage (V) | 3.9320 | 3.9310 | 3.9291 | 3.9314 | 3.9301 | 3.9310 | 3.9327 | 3.9291 | 3.7652 | 3.8362 | 3.8627 |
| 1200 h/ Voltage (V) | 3.9261 | 3.9254 | 3.9231 | 3.9252 | 3.9241 | 3.924.5 | 3.9262 | 3.9231 | 3.6324 | 3.7852 | 3.8425 |
| 1400 h/ Voltage (V) | 3.9212 | 3.9204 | 3.9186 | 3.9193 | 3.9196 | 3.9197 | 3.9205 | 3.9178 | 3.4253 | 3.7055 | 3.8214 |

It can be seen from the voltage test results that the batteries in Examples 1-8 have slower decay than those in Comparative Examples 1-3 in a high-temperature box at 80°C, and can be stored at 80°C for more than two months. However, in Comparative Example 1, the voltage value of the battery prepared from uncoated nickel-cobalt-manganese positive electrode material began to decay rapidly at day 30, which seriously affected the battery performance. In Comparative Example 2, the voltage value of the battery prepared from nickel-cobalt-manganese positive electrode material without nanoscale aluminum tripolyphosphate mixed began to decay rapidly at day 40. In Comparative Example 3, the voltage value of the battery prepared from the positive electrode material, which is mixed with nanoscale aluminum tripolyphosphate and has no colloidal silica sol as a binder, began to decay rapidly at day 45. Therefore, it can be found that by coating with aluminum tripolyphosphate and adopting the colloidal silica sol as a binder, the ternary positive electrode material in the present application can achieve the technical effect that the battery has improved high-temperature resistance and especially can be stored at 80-85°C for a long time.

The applicant has stated that although the embodiments of the present application are described above, the protection scope of the present application is not limited to the embodiments.

## Claims

1. A preparation method of a positive electrode material, comprising the following steps:
(1) mixing aluminum tripolyphosphate with a ternary positive electrode material to form a positive electrode material premix;
(2) mixing a colloidal silica sol with the positive electrode material premix in step (1) to form an positive electrode material mixture;
(3) drying the positive electrode material mixture in step (2) to obtain a positive electrode material matrix;
(4) sintering the positive electrode material matrix obtained in step (3) to obtain the positive electrode material.

2. The preparation method of a positive electrode material according to claim 1, wherein in step (1), based on a total mass of aluminum tripolyphosphate and the ternary positive electrode material being 100%, the aluminum tripolyphosphate has a mass fraction of 0.1-1%.

3. The preparation method of a positive electrode material according to claim 1 or 2, wherein the mixing in step (1) is carried out in a manner of dry mixing.

4. The preparation method of a positive electrode material according to claim 3, wherein the dry mixing is ball-milling dry mixing;
optionally, the ball-milling dry mixing has a ball-to-material ratio of 1.5:1-2:1;
optionally, the ball-milling dry mixing has a mixing time of 5-25 min.

5. The preparation method of a positive electrode material according to any one of claims 1 to 4, wherein a preparation method of the colloidal silica sol in step (2) comprises
dissolving a sodium silicate aqueous solution, and adding CO₂ and/or acid to form the colloidal silica sol;
optionally, the sodium silicate aqueous solution has a concentration of 5-25%;
optionally, the acid comprises any one or a combination of at least two of hydrochloric acid, phosphoric acid or sulfuric acid;
optionally, the colloidal silica sol has a net silicon content of 0.1-1%.

6. The preparation method of a positive electrode material according to any one of claims 1 to 5, wherein the drying in step (3) comprises vacuum drying, blast drying and/or air drying, optionally vacuum drying;
optionally, the vacuum drying has a temperature of 100-150°C;
optionally, the vacuum drying has a vacuum degree of -0.05 Mpa to 0.1 Mpa;
optionally, the vacuum drying has a time of 1-10 h.

7. The preparation method of a positive electrode material according to any one of claims 1 to 6, wherein the sintering in step (4) has a temperature of 450-650°C;
optionally, the sintering in step (4) has a time of 1-10 h;
optionally, step (4) further comprises subjecting the product obtained from the sintering to post-treatment;
optionally, the post-treatment is carried out in a manner which comprises any one or a combination of at least two of crushing, sieving or iron removal.

8. The preparation method of a positive electrode material according to any one of claims 1 to 7, wherein the preparation method comprises:
(1) subjecting aluminum tripolyphosphate and a ternary positive electrode material to ball-milling dry mixing at a ball-to-material ratio of 1.5:1-2:1 for 5-25 min to form a positive electrode material premix for later use;
(2) mixing a colloidal silica sol with the positive electrode material premix in step (1) to form a positive electrode material mixture, wherein a preparation method of the colloidal silica sol comprises dissolving a sodium silicate aqueous solution, and adding acid or CO₂ to form the colloidal silica sol; wherein the sodium silicate solution has a concentration of 5-25%; the acid comprises any one or a combination of at least two of hydrochloric acid, phosphoric acid or sulfuric acid;
(3) subjecting the positive electrode material mixture in step (2) to vacuum drying at 100-150°C with a vacuum degree of -0.05 Mpa to 0.1 Mpa for 1-10 h to obtain a positive electrode material matrix;
(4) sintering the positive electrode material matrix obtained in step (3) at 450-650°C for 1-10 h, and then subjecting the product to crushing, sieving or iron removal to finally obtain the positive electrode material.

9. A positive electrode material, which is prepared by the preparation method of a positive electrode material according to any one of claims 1 to 8.

10. The positive electrode material according to claim 9, wherein the positive electrode material comprises a ternary positive electrode material, aluminum tripolyphosphate and a binder;
optionally, the aluminum tripolyphosphate is dispersed among the ternary positive electrode material and on the surface of the ternary positive electrode material.

11. The positive electrode material according to claim 9 or 10, wherein the aluminum tripolyphosphate is nanoparticles;
optionally, the aluminum tripolyphosphate has an average particle size of 2-20 nm;
optionally, the binder is a colloidal silica sol;
optionally, a silica coating layer coated on the surface of the ternary positive electrode material is obtained by drying the colloidal silica sol;
optionally, the silica coating layer has a thickness of 1-10 nm.

12. A lithium-ion battery, which comprises the positive electrode material according to any one of claims 9 to 11.

## Patentansprüche

1. Verfahren zur Herstellung eines Positivelektrodenmaterials, umfassend die folgenden Schritte:
(1) Mischen von Aluminiumtripolyphosphat mit einem ternären Positivelektrodenmaterial, um eine Positivelektrodenmaterialvormischung zu bilden;
(2) Mischen eines kolloidalen Kieselsäuresols mit der Positivelektrodenmaterialvormischung aus Schritt (1), um eine Positivelektrodenmaterialmischung zu bilden;
(3) Trocknen der Positivelektrodenmaterialmischung aus Schritt (2), um eine Positivelektrodenmaterialmatrix zu erhalten;
(4) Sintern der in Schritt (3) erhaltenen Positivelektrodenmaterialmatrix, um das Positivelektrodenmaterial zu erhalten.

2. Verfahren zur Herstellung eines Positivelektrodenmaterials nach Anspruch 1, wobei das Aluminiumtripolyphosphat in Schritt (1) basierend auf einer Gesamtmasse von Aluminiumtripolyphosphat und dem ternären Positivelektrodenmaterial von 100 % eine Massenfraktion von 0,1-1 % aufweist.

3. Verfahren zur Herstellung eines Positivelektrodenmaterials nach Anspruch 1 oder 2, wobei das Mischen in Schritt (1) als Trockenmischen durchgeführt wird.

4. Verfahren zur Herstellung eines Positivelektrodenmaterials nach Anspruch 3, wobei das Trockenmischen ein Trockenmischen durch Mahlen in einer Kugelmühle ist,
wobei das Trockenmischen durch Mahlen in einer Kugelmühle optional ein Kugel-zu-Material-Verhältnis von 1,5:1-2:1 aufweist,
wobei das Trockenmischen durch Mahlen in einer Kugelmühle optional eine Mischdauer von 5-25 min aufweist.

5. Verfahren zur Herstellung eines Positivelektrodenmaterials nach einem der Ansprüche 1 bis 4, wobei ein Verfahren zur Herstellung des kolloidalen Kieselsäuresols in Schritt (2) Folgendes umfasst:
Lösen einer wässrigen Natriumsilikatlösung und Hinzufügen von CO₂ und/oder Säure, um das kolloidale Kieselsäuresol zu bilden,
wobei die wässrige Natriumsilikatlösung optional eine Konzentration von 5-25 % aufweist,
wobei die Säure optional Salzsäure, Phosphorsäure oder Schwefelsäure oder eine Kombination von mindestens zwei davon umfasst,
wobei das kolloidale Kieselsäuresol optional einen Nettosiliziumgehalt von 0,1-1 % aufweist.

6. Verfahren zur Herstellung eines Positivelektrodenmaterials nach einem der Ansprüche 1 bis 5, wobei das Trocknen in Schritt (3) Vakuumtrocknen, Gebläsetrocknen und/oder Lufttrocknen, optional Vakuumtrocknen, umfasst,
wobei das Vakuumtrocknen optional eine Temperatur von 100-150 °C aufweist,
wobei das Vakuumtrocknen optional einen Druck von -0,05 Mpa bis 0,1 Mpa aufweist,
wobei das Vakuumtrocknen optional eine Dauer von 1-10 h aufweist.

7. Verfahren zur Herstellung eines Positivelektrodenmaterials nach einem der Ansprüche 1 bis 6, wobei das Sintern in Schritt (4) eine Temperatur von 450-650 °C aufweist,
wobei das Sintern in Schritt (4) optional eine Dauer von 1-10 h aufweist,
wobei Schritt (4) optional ferner ein Unterziehen des aus dem Sintern erhaltenen Produkts einer Nachbehandlung umfasst,
wobei die Nachbehandlung optional in einer Weise durchgeführt wird, die Zerkleinern, Sieben oder Eisenentfernung oder eine Kombination von mindestens zwei davon umfasst.

8. Verfahren zur Herstellung eines Positivelektrodenmaterials nach einem der Ansprüche 1 bis 7, wobei das Herstellungsverfahren Folgendes umfasst:
(1) Unterziehen von Aluminiumtripolyphosphat und eines ternären Positivelektrodenmaterials einem Trockenmischen durch Mahlen in einer Kugelmühle bei einem Kugel-zu-Material-Verhältnis von 1,5:1-2:1 für 5-25 min, um eine Positivelektrodenmaterialvormischung zur späteren Verwendung zu bilden;
(2) Mischen eines kolloidalen Kieselsäuresols mit der Positivelektrodenmaterialvormischung aus Schritt (1), um eine Positivelektrodenmaterialmischung zu bilden, wobei ein Verfahren zur Herstellung des kolloidalen Kieselsäuresols ein Lösen einer wässrigen Natriumsilikatlösung und ein Hinzufügen von Säure oder CO₂ umfasst, um das kolloidale Kieselsäuresol zu bilden, wobei die Natriumsilikatlösung eine Konzentration von 5-25 % aufweist, wobei die Säure Salzsäure, Phosphorsäure oder Schwefelsäure oder eine Kombination von mindestens zwei davon umfasst;
(3) Unterziehen der Positivelektrodenmaterialmischung aus Schritt (2) einem Vakuumtrocknen bei 100-150 °C mit einem Druck von -0,05 Mpa bis 0,1 Mpa für 1-10 h, um eine Positivelektrodenmaterialmatrix zu erhalten;
(4) Sintern der in Schritt (3) erhaltenen Positivelektrodenmaterialmatrix bei 450-650 °C für 1-10 h und dann Unterziehen des Produkts einem Zerkleinern, Sieben oder einer Eisenentfernung, um schließlich das Positivelektrodenmaterial zu erhalten.

9. Positivelektrodenmaterial, das durch das Verfahren zur Herstellung eines Positivelektrodenmaterials nach einem der Ansprüche 1 bis 8 hergestellt wird.

10. Positivelektrodenmaterial nach Anspruch 9, wobei das Positivelektrodenmaterial ein ternäres Positivelektrodenmaterial, Aluminiumtripolyphosphat und ein Bindemittel umfasst,
wobei das Aluminiumtripolyphosphat optional in dem ternären Positivelektrodenmaterial und auf der Oberfläche des ternären Positivelektrodenmaterials dispergiert ist.

11. Positivelektrodenmaterial nach Anspruch 9 oder 10, wobei das Aluminiumtripolyphosphat Nanopartikel ist,
wobei das Aluminiumtripolyphosphat optional eine mittlere Partikelgröße von 2-20 nm aufweist,
wobei das Bindemittel optional kolloidales Kieselsäuresol ist,
wobei eine auf die Oberfläche des ternären Positivelektrodenmaterials aufgebrachte Kieselsäurebeschichtungsschicht optional durch Trocknen des kolloidalen Kieselsäuresols erhalten wird,
wobei die Kieselsäurebeschichtungsschicht optional eine Dicke von 1-10 nm aufweist.

12. Lithium-Ionen-Batterie, die das Positivelektrodenmaterial nach einem der Ansprüche 9 bis 11 umfasst.

## Revendications

1. Procédé de préparation d'un matériau d'électrode positive, comprenant les étapes suivantes :
(1) le mélange de tripolyphosphate d'aluminium avec un matériau d'électrode positive ternaire pour former un prémélange de matériau d'électrode positive ;
(2) le mélange d'un sol de silice colloïdale avec le prémélange de matériau d'électrode positive à l'étape (1) pour former un mélange de matériau d'électrode positive ;
(3) le séchage du mélange de matériau d'électrode positive à l'étape (2) pour obtenir une matrice de matériau d'électrode positive ;
(4) le frittage de la matrice de matériau d'électrode positive obtenue à l'étape (3) pour obtenir le matériau d'électrode positive.

2. Procédé de préparation d'un matériau d'électrode positive selon la revendication 1, dans lequel, à l'étape (1), sur la base d'une masse totale de tripolyphosphate d'aluminium et du matériau d'électrode positive ternaire de 100 %, le tripolyphosphate d'aluminium présente une fraction massique de 0,1-1 %.

3. Procédé de préparation d'un matériau d'électrode positive selon la revendication 1 ou 2, dans lequel le mélange à l'étape (1) est réalisé par mélange à sec.

4. Procédé de préparation d'un matériau d'électrode positive selon la revendication 3, dans lequel le mélange à sec est un mélange à sec par broyage à billes ;
optionnellement, le mélange à sec par broyage à billes se fait avec un rapport bille sur matériau de 1,5:1-2:1 ;
optionnellement, le mélange à sec par broyage à billes se fait sur une durée de mélange de 5-25 min.

5. Procédé de préparation d'un matériau d'électrode positive selon l'une quelconque des revendications 1 à 4, dans lequel un procédé de préparation du sol de silice colloïdale à l'étape (2) comprend :
la dissolution d'une solution aqueuse de silicate de sodium, et l'ajout de CO₂ et/ou d'acide pour former le sol de silice colloïdale ;
optionnellement, la solution aqueuse de silicate de sodium présente une concentration de 5-25 % ;
optionnellement, l'acide comprend l'un quelconque ou une combinaison d'au moins deux acides parmi l'acide chlorhydrique, l'acide phosphorique ou l'acide sulfurique ;
optionnellement, le sol de silice colloïdale présente une teneur nette en silicium de 0,1-1 %.

6. Procédé de préparation d'un matériau d'électrode positive selon l'une quelconque des revendications 1 à 5, dans lequel le séchage à l'étape (3) comprend un séchage sous vide, un séchage par soufflage et/ou un séchage à l'air, optionnellement un séchage sous vide ;
optionnellement, le séchage sous vide se fait à une température de 100-150°C ;
optionnellement, le séchage sous vide se fait sous un degré de vide de -0,05 Mpa à 0,1 Mpa ;
optionnellement, le séchage sous vide se fait sur une durée de 1-10 h.

7. Procédé de préparation d'un matériau d'électrode positive selon l'une quelconque des revendications 1 à 6, dans lequel le frittage à l'étape (4) se fait à une température de 450-650°C ;
optionnellement, le frittage dans l'étape (4) se fait sur une durée de 1-10 h ;
optionnellement, l'étape (4) comprend en outre la soumission du produit obtenu à l'issue du frittage à un post-traitement ;
optionnellement, le post-traitement est réalisé d'une manière qui comprend l'un quelconque ou une combinaison d'au moins deux procédés parmi un broyage, un tamisage ou une déferrisation.

8. Procédé de préparation d'un matériau d'électrode positive selon l'une quelconque des revendications 1 à 7, dans lequel le procédé de préparation comprend :
(1) la soumission du tripolyphosphate d'aluminium et d'un matériau d'électrode positive ternaire à un mélange à sec par broyage à billes avec un rapport bille sur matériau de 1,5:1-2:1 pendant 5-25 min pour former un prémélange de matériau d'électrode positive pour une utilisation ultérieure ;
(2) le mélange d'un sol de silice colloïdale avec le prémélange de matériau d'électrode positive à l'étape (1) pour former un mélange de matériau d'électrode positive, dans lequel un procédé de préparation du sol de silice colloïdale comprend la dissolution d'une solution aqueuse de silicate de sodium, et l'ajout d'acide ou de CO₂ pour former le sol de silice colloïdale ; dans lequel la solution de silicate de sodium présente une concentration de 5-25 % ; l'acide comprend l'un quelconque ou une combinaison d'au moins deux acides parmi l'acide chlorhydrique, l'acide phosphorique ou l'acide sulfurique ;
(3) la soumission du mélange de matériau d'électrode positive à l'étape (2) à un séchage sous vide à 100-150°C avec un degré de vide de -0,05 Mpa à 0,1 Mpa pendant 1-10 h pour obtenir une matrice de matériau d'électrode positive ;
(4) le frittage de la matrice de matériau d'électrode positive obtenue à l'étape (3) à 450-650°C pendant 1-10 h, puis la soumission du produit à un broyage, un tamisage ou une déferrisation pour obtenir finalement le matériau d'électrode positive.

9. Matériau d'électrode positive, qui est préparé par le procédé de préparation d'un matériau d'électrode positive selon l'une quelconque des revendications 1 à 8.

10. Matériau d'électrode positive selon la revendication 9, dans lequel le matériau d'électrode positive comprend un matériau d'électrode positive ternaire, du tripolyphosphate d'aluminium et un liant ;
optionnellement, le tripolyphosphate d'aluminium est dispersé parmi le matériau d'électrode positive ternaire et sur la surface du matériau d'électrode positive ternaire.

11. Matériau d'électrode positive selon la revendication 9 ou 10, dans lequel le tripolyphosphate d'aluminium est sous forme de nanoparticules ;
optionnellement, le tripolyphosphate d'aluminium présente une granulométrie moyenne de 2-20 nm ;
optionnellement, le liant est un sol de silice colloïdale ;
optionnellement, une couche de revêtement de silice appliquée sur la surface du matériau d'électrode positive ternaire est obtenue par séchage du sol de silice colloïdale ;
optionnellement, la couche de revêtement de silice présente une épaisseur de 1-10 nm.

12. Batterie au lithium-ion, qui comprend le matériau d'électrode positive selon l'une quelconque des revendications 9 à 11.
